# FASCICULE DE BREVET EUROPEEN

(11) **EP 2 009 234 B1**
(45) Date de publication et mention de la délivrance du brevet: **24.08.2016**
(21) Numéro de dépôt: 08158842.8
(22) Date de dépôt: 24.06.2008
(51) Int. Cl.: F01D 5/08

(54) **Dispositif de refroidissement des alvéoles d'un disque de rotor de turbomachine**
Kühlvorrichtung der Hohlräume einer Rotorscheibe einer Strömungsmaschine
Device for cooling the cavities of a turbomachine rotor disc

(30) Priorité: 27.06.2007 FR 0756065
(43) Date de publication de la demande: 31.12.2008
(73) Titulaire: SNECMA, 75015 Paris (FR)
(72) Inventeur: DEJAUNE, Claude, Gérard, René, 77350, BOISSISE LA BERTRAND (FR); GROS, Valérie, Annie, 77166, GRISY SUISNES (FR); LORO, Gaël, 77380, COMBS LA VILLE (FR); SOUPIZON, Jean-Luc, 77530, VAUX LE PENIL (FR)
(74) Mandataire: Boura, Olivier

(56) Documents cités:
- EP-A- 1 264 964
- EP-A- 1 571 294
- US-A- 2 951 340

## Description

### Arrière-plan de l'invention

La présente invention se rapporte au domaine général des disques de rotor de turbomachine munis à leur périphérie d'alvéoles dans lesquelles sont montées des pieds d'aubes. Elle vise plus précisément un dispositif permettant de refroidir efficacement ces alvéoles.

De façon connue en soi, les disques de rotor d'une turbomachine, tels que les disques des différents étages de la turbine basse-pression, comportent à leur périphérie une pluralité d'alvéoles sensiblement axiales dans lesquelles sont montées par emmanchement les pieds des aubes mobiles de la turbine.

Pendant le fonctionnement de la turbomachine, la veine d'écoulement de la turbine basse-pression dans laquelle sont disposées les aubes est traversée par des gaz dont la température est très élevée. Les alvéoles des disques qui reçoivent les pieds des aubes étant donc directement exposées à ces gaz, il est nécessaire de les refroidir pour éviter tout endommagement des disques.

A cet effet, il est connu de prélever une partie de l'air qui s'écoule en dehors de la veine d'écoulement de la turbine basse-pression pour l'acheminer via un circuit de refroidissement jusqu'aux alvéoles des disques de rotor. En pratique, chaque disque de rotor comporte une bride annulaire qui s'étend vers l'amont depuis la face radiale amont du disque et autour de laquelle est monté un flasque annulaire de maintien. La bride du disque et le flasque de maintien sont disposés de façon à ménager entre eux un espace annulaire formant une cavité de diffusion de l'air de refroidissement. Cette cavité de diffusion est alimentée en air de refroidissement à son extrémité amont par une pluralité d'orifices régulièrement répartis autour de l'axe de rotation du disque et débouche à son extrémité aval dans le fond de chacune des alvéoles du disque. L'air circulant en dehors de la veine d'écoulement de la turbine pénètre dans la cavité de diffusion de ce circuit de refroidissement par les orifices, se diffuse dans cette cavité puis vient ventiler les alvéoles du disque pour les refroidir. On pourra se référer au document EP 1,571,294.

Ce type de circuit de refroidissement ne permet cependant pas d'obtenir un refroidissement parfaitement homogène pour toutes les alvéoles du disque de rotor, ce qui est néfaste au bon refroidissement du disque et donc à sa durée de vie. En effet, on comprend aisément qu'avec une telle configuration, les alvéoles qui sont disposées dans le prolongement direct des orifices d'alimentation en air du circuit de refroidissement sont nettement mieux refroidies que les alvéoles qui en sont le plus éloignées angulairement.

### Objet et résumé de l'invention

La présente invention vise à remédier aux inconvénients précités en proposant un dispositif qui permet d'améliorer le refroidissement des alvéoles du disque de rotor afin d'accroître sa durée de vie.

Ce but est atteint grâce à un dispositif de refroidissement des alvéoles d'un disque de rotor de turbomachine selon la revendication 1:

Par alvéoles situées dans le prolongement radial d'un orifice d'admission d'air, on entend la ou les alvéoles qui sont sensiblement disposées dans le même plan radial que chaque orifice.

En réduisant le débit d'air débouchant dans les alvéoles du disque de rotor qui sont situées dans le prolongement radial des orifices d'admission d'air, on augmente nécessairement le débit d'air débouchant dans les alvéoles les plus éloignées des orifices d'admission d'air. La quantité d'air de refroidissement admise dans chacune des alvéoles du disque est donc sensiblement identique sur l'ensemble du disque. Il en résulte un refroidissement parfaitement homogène pour toutes les alvéoles du disque, ce qui permet d'augmenter la durée de vie du disque.

La face externe de la bride du disque et/ou la face interne de la bride du flasque de maintien présente son extrémité aval et au niveau des alvéoles du disque situées dans le prolongement radial de chaque orifice d'admission d'air un bossage en saillie dans la cavité de diffusion d'air pour réduire la section de passage de l'air débouchant dans ces alvéoles. Réduire la section de passage de l'air correspond, à vitesses égales, à réduire le débit d'air débouchant dans ces alvéoles.

Chaque bossage présente une hauteur maximale au niveau des alvéoles du disque situées dans le prolongement radial de l'orifice d'admission d'air correspondant de sorte que la section de passage de l'air y est minimale et des hauteurs minimales à mi-distance entre l'orifice d'admission d'air correspondant et les deux orifices qui lui sont directement adjacents de sorte que les sections de passage de l'air y sont maximales. De la sorte, le débit d'air débouchant dans les alvéoles situées dans le prolongement des orifices d'admission d'air est diminué et celui débouchant dans les alvéoles les plus éloignées est augmenté.

Selon une caractéristique avantageuse, chaque bossage décroît de manière sensiblement régulière entre sa hauteur maximale et ses hauteurs minimales. De la sorte, le débit d'air débouchant dans chaque alvéole peut être parfaitement adapté à la position angulaire relative de l'alvéole par rapport aux orifices d'admission d'air.

Chaque bossage peut présenter un profil sensiblement plan ou sensiblement curviligne. Le flasque de maintien peut être fixé sur la bride du disque au moyen de liaisons boulonnées serrant leur extrémité libre respective, les orifices d'admission d'air étant disposés circonférentiellement entre les liaisons boulonnées.

L'invention a également pour objet une turbomachine comprenant au moins un dispositif de refroidissement des alvéoles d'un disque de rotor tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue partielle et en coupe longitudinale d'une turbine basse-pression de turbomachine équipée d'un dispositif selon un mode de réalisation de l'invention ;
- la figure 2 est une vue en coupe selon II-II de la figure 1 ;
- la figure 3 est une vue schématique et en développé de la figure 2 ;
- la figure 4 représente partiellement et en développé un dispositif selon un autre mode de réalisation de l'invention ; et
- la figure 5 représente en coupe longitudinale un dispositif selon encore un autre mode de réalisation de l'invention.

### Description détaillée de modes de réalisation

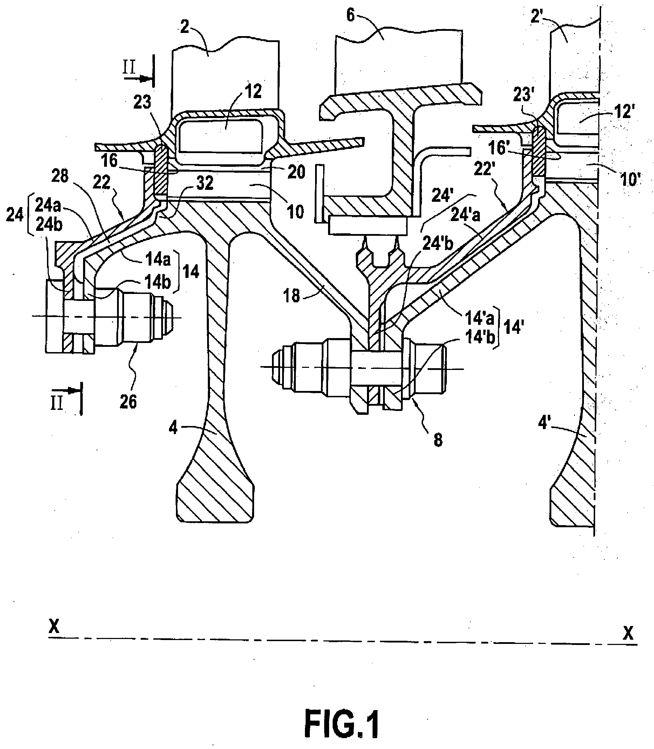

La figure 1 représente partiellement en coupe longitudinale une turbine basse-pression d'une turbomachine aéronautique équipée d'un dispositif selon un mode de réalisation de l'invention.

Bien entendu, la présente invention s'applique à tout autre ensemble de turbomachine (aéronautique ou terrestre) muni d'un disque de rotor ayant des alvéoles dans lesquelles sont montées axialement des pieds d'aubes.

La figure 1 représente plus précisément le premier étage et le deuxième étage de la turbine basse-pression. Le premier étage se compose d'une roue mobile formée d'une pluralité d'aubes mobiles 2 montées axialement sur un disque de rotor 4. Le deuxième étage se compose quant à lui d'un distributeur formé d'une pluralité d'aubes fixes 6 et d'une roue mobile placée derrière le distributeur et formée d'une pluralité d'aubes mobiles 2' montées axialement sur un disque de rotor 4'.

Les disques de rotor 4, 4' du premier et du deuxième étage de la turbine sont centrés sur l'axe longitudinal X-X de la turbomachine et sont fixés l'un à l'autre au moyen de liaisons boulonnées 8 régulièrement réparties autour de cet axe X-X.

Chaque disque 4, 4' comporte à sa périphérie une pluralité d'alvéoles 10, 10' sensiblement axiales, ouvertes vers l'extérieur du disque et régulièrement réparties autour de l'axe de rotation des disques (cet axe de rotation est confondu avec l'axe longitudinal X-X de la turbomachine). Les alvéoles sont destinées à recevoir chacune axialement le pied 12,. 12' (par exemple en forme de sapin) d'une aube mobile 2, 2' (par exemple par emmanchement).

Chaque disque 4, 4' comporte en outre une bride annulaire 14, 14' qui s'étend axialement vers l'amont depuis la face radiale amont 16, 16' du disque. Cette bride 14, 14' se compose d'une partie annulaire 14a, 14'a sensiblement axiale se prolongeant par une partie annulaire 14b, 14'b sensiblement radiale (ci-après appelée extrémité libre de la bride du disque).

Le disque 4 du premier étage de la turbine comporte également une bride annulaire 18 qui s'étend axialement vers l'aval depuis la face radiale aval 20 du disque. Cette bride 18 sert à la fixation du disque 4 sur le disque 4' du deuxième étage par l'intermédiaire des liaisons boulonnées 8 comme indiqué précédemment.

Un flasque annulaire de maintien 22, 22' est monté contre la face radiale amont 16, 16' de chaque disque 4, 4' avec interposition d'un jonc annulaire d'arrêt 23, 23'. Chaque flasque de maintien 22, 22' comprend une bride annulaire 24, 24' qui s'étend axialement vers l'amont et qui est disposée autour de la bride correspondante 14, 14' du disque.

De façon plus précise, la bride 24, 24' du flasque de maintien se compose d'une partie annulaire 24a, 24'a sensiblement axiale se prolongeant par une partie annulaire 24b, 24'b sensiblement radiale (ci-après appelée extrémité libre de la bride du flasque).

Le flasque de maintien 22 du premier étage de la turbine est fixé sur la bride 14 du disque 4 au moyen de liaisons boulonnées 26 serrant leur extrémité libre respective 24b, 14b. Quant au flasque de maintien 22' du deuxième étage, il est fixé sur la bride 14' du disque 4' au moyen des liaisons boulonnées 8 de fixation des disques 4, 4'.

Pour des raisons de commodité, on décrira seulement le circuit destiné au refroidissement des alvéoles 10 du disque 4 du premier étage de la turbine. Bien entendu, le circuit de refroidissement des alvéoles 10' du disque 4' du deuxième étage de la turbine est parfaitement analogue à celui du premier étage.

La bride 24 du flasque de maintien 22 est disposée autour de la bride 14 du disque de façon à ménager avec celle-ci un espace annulaire 28 formant une cavité de diffusion de l'air de refroidissement. Cette cavité de diffusion 28 est essentiellement formée entre les parties axiales 24a, 14a des brides respectives 24, 14 du flasque de maintien et du disque.

La cavité de diffusion 28 débouche à son extrémité aval dans le fond de chacune des alvéoles 10 du disque 4 à l'extrémité amont de celles-ci. A son extrémité amont, la cavité de diffusion est fermée par serrage des liaisons boulonnées 26 entre les extrémités libres 24b, 14b des brides respectives 24, 14 du flasque de maintien et du disque.

Par ailleurs, la cavité de diffusion 28 est alimentée par une pluralité d'orifices d'admission d'air 30 qui sont régulièrement répartis autour de l'axe longitudinal X-X et qui s'ouvrent dans la cavité de diffusion à l'extrémité amont de celle-ci.

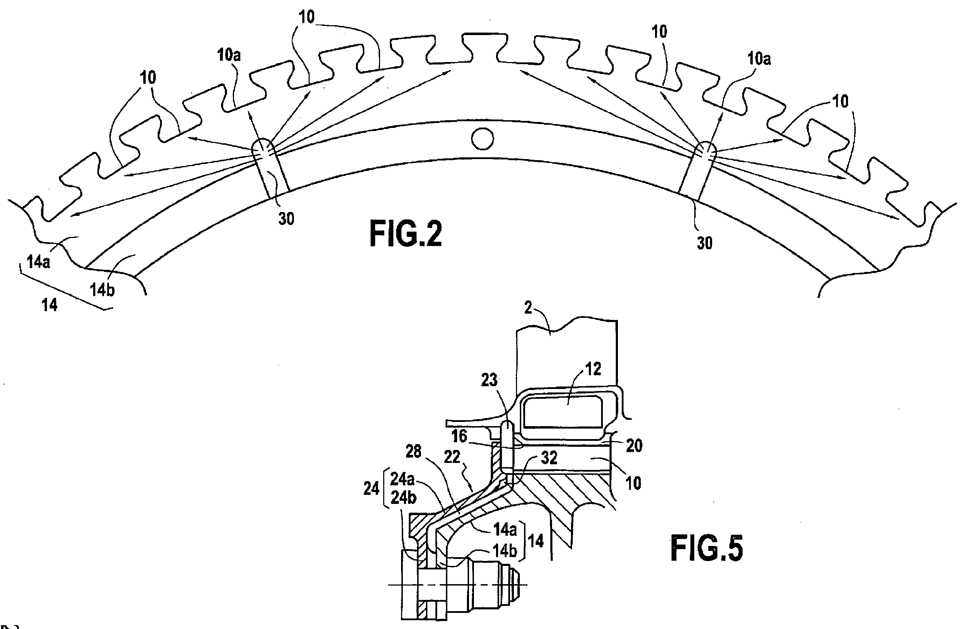

Sur l'exemple de réalisation de la figure 2, ces orifices d'admission d'air 30 sont formés par usinage selon une direction sensiblement radiale de l'extrémité libre 14b de la bride 14 du disque 4. Bien entendu, ces orifices pourraient tout aussi bien être obtenus par usinage de l'extrémité libre 24b de la bride 24 du flasque de maintien 22.

Par ailleurs, le nombre d'orifices d'admission d'air 30 sur l'ensemble du disque est variable. Ainsi, dans l'exemple de la figure 2, l'espacement angulaire entre deux orifices d'admission d'air 30 adjacents correspond à environ huit alvéoles du disque. Ainsi, chaque orifice 30 fournit de l'air de refroidissement à environ sept alvéoles comme schématisé par les flèches sur cette figure 2.

Selon l'invention, la cavité de diffusion d'air 28 comporte au niveau de son extrémité aval des moyens pour réduire le débit d'air débouchant dans les alvéoles du disque 4 qui sont situées dans le prolongement radial des orifices d'admission d'air 30.

Par alvéoles situées dans le prolongement radial d'un orifice d'admission d'air, on entend la ou les alvéoles qui sont sensiblement disposées dans le même plan radial que chaque orifice d'admission d'air. Ainsi, dans l'exemple représenté à la figure 2, les alvéoles référencées 10a correspondent aux alvéoles qui sont situées dans le prolongement radial de chaque orifice d'admission d'air.

Selon un mode de réalisation de ces moyens illustré par les figures 1 à 3, la face externe de la partie axiale 14a de la bride 14 du disque présente à son extrémité aval (c'est-à-dire à la sortie de la cavité de diffusion) et au niveau de chaque alvéole 10a située dans le prolongement radial des orifices d'admission d'air 30 un bossage 32.

Un tel bossage 32 fait saillie dans la cavité de diffusion d'air 28 et permet ainsi de réduire la section de passage de l'air débouchant dans ces alvéoles 10a.

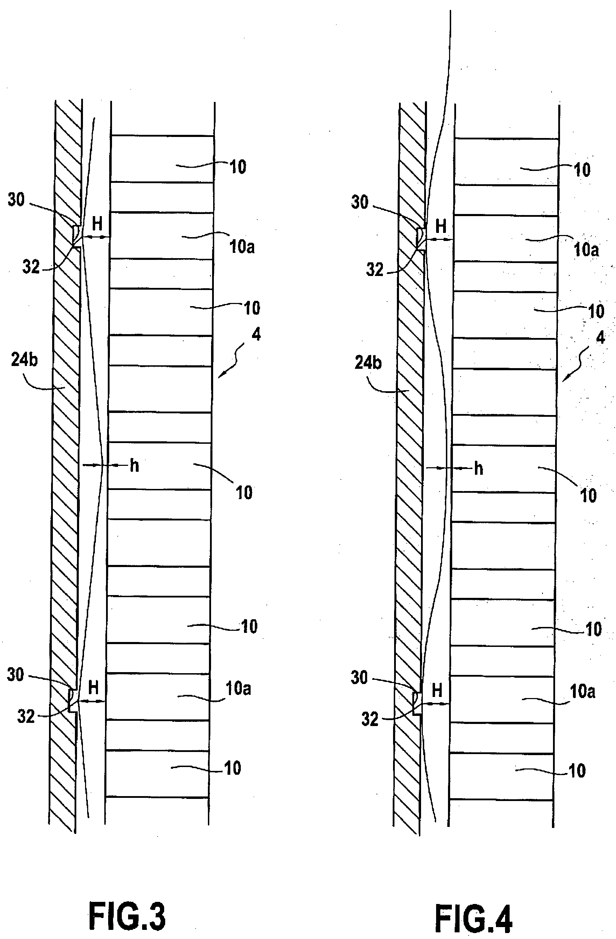

La réduction de la section de passage de l'air sortant de la cavité de diffusion 28 et débouchant dans les alvéoles 10a qui sont situées dans le prolongement radial des orifices 30 est notamment visible sur la figure 3. A vitesses d'écoulement identiques, le débit d'air alloué à la ventilation des alvéoles 10a situées dans le prolongement radial des orifices d'admission d'air 30 est donc réduit ce qui a pour conséquence naturelle d'augmenter celui alimentant les autres alvéoles du disque. Ces autres alvéoles étant plus éloignées des orifices d'admission d'air, le chemin à parcourir pour les alimenter est plus long. Cependant, l'augmentation du débit d'air destiné à les refroidir permet de compenser leur éloignement et donc d'homogénéiser sur l'ensemble du disque le refroidissement des alvéoles.

Selon une caractéristique avantageuse illustrée par la figure 3, chaque bossage 32 présente une hauteur (de pénétration dans la cavité de diffusion) H qui est maximale au niveau des alvéoles 10a situées dans le prolongement radial de l'orifice d'admission d'air correspondant 30 et des hauteurs h qui sont minimales (ou nulles) à mi-distance angulaire entre l'orifice d'admission d'air correspondant et les deux orifices qui lui sont directement adjacents.

Ainsi, la section de passage de l'air au niveau des alvéoles 10a situées dans le prolongement radial des orifices d'admission d'air 30 est minimale et la section de passage de l'air à mi-distance angulaire entre deux orifices d'admission d'air adjacents est maximale. Ceci correspond parfaitement au besoin d'augmenter au maximum le débit d'air pour les alvéoles qui sont le plus éloignées des orifices d'admission d'air (ces alvéoles sont situées à mi-distance angulaire entre deux orifices adjacents).

De préférence, comme représenté sur la figure 3, chaque bossage 32 décroît de manière sensiblement régulière entre sa hauteur maximale H et ses hauteurs minimales h. De la sorte, le débit d'air débouchant dans chaque alvéole du disque peut être parfaitement adapté à la position angulaire relative de l'alvéole par rapport aux orifices d'admission d'air.

Dans le mode de réalisation de l'invention représenté par les figures 1 à 3, chaque bossage 32 présente un profil qui est sensiblement plan (les surfaces formant les bossages sont sensiblement planes).

Bien entendu, tout autre forme de profil pourrait être envisagé. Ainsi, le profil des bossages 32 représentés sur la figure 4 est curviligne, et plus précisément conique (il pourrait aussi être cylindrique, etc.).

Par ailleurs, toujours dans le mode de réalisation de l'invention représenté par les figures 1 à 3, les bossages 32 sont formés sur la face externe de la partie axiale 14a de la bride 14 du disque.

Il est toutefois possible d'envisager comme représenté par la figure 5 que les bossages 32 soient plutôt formés sur la face interne de la partie axiale 24a de la bride 24 du flasque de maintien 22, ces bossages faisant bien entendu également saillie dans la cavité de diffusion 28.

Une autre variante non représentée sur les figures consisterait à former les bossages à la fois sur la face externe de la bride du disque mais aussi sur la face interne de la bride du flasque de maintien.

Enfin, on notera que quelque soit le mode de réalisation de l'invention, les orifices d'admission d'air 30 sont de préférence disposés circonférentiellement entre les liaisons boulonnées 26 de fixation du flasque de maintien 22 sur la bride 14 du disque 4.

## Revendications

1. Dispositif de refroidissement des alvéoles d'un disque de rotor de turbomachine, comportant :
un disque de rotor (4) comprenant :
à sa périphérie, une pluralité d'alvéoles (10, 10a) sensiblement axiales qui sont régulièrement réparties autour de l'axe de rotation (X-X) du disque, et
une bride annulaire (14) qui s'étend vers l'amont depuis une face radiale amont (16) du disque ;
un flasque annulaire de maintien (22) monté contre la face radiale amont du disque et comprenant une bride annulaire (24) qui s'étend vers l'amont et qui est disposée autour de la bride (14) du disque en ménageant avec celle-ci un espace annulaire (28) formant une cavité de diffusion de l'air de refroidissement, cette cavité de diffusion débouchant à son extrémité aval dans le fond de chacune des alvéoles du disque à l'extrémité amont de celles-ci ; et
une pluralité d'orifices d'admission d'air (30) régulièrement répartis autour de l'axe de rotation du disque et s'ouvrant dans la cavité de diffusion à l'extrémité amont de celle-ci ;
**caractérisé en ce que** la face externe de la bride (14) du disque (4) et/ou la face interne de la bride (24) du flasque de maintien (22) présente à son extrémité aval et au niveau de chaque alvéole (10a) du disque située dans le prolongement radial des orifices d'admission d'air (30) un bossage (32) en saillie dans la cavité de diffusion d'air (28), chaque bossage (32) présentant une hauteur maximale (H) au niveau dés alvéoles (10a) du disque situées dans le prolongement radial de l'orifice d'admission d'air (30) correspondant de sorte que la section de passage de l'air y est minimale et des hauteurs minimales (h) à mi-distance entre l'orifice d'admission d'air correspondant et les deux orifices qui lui sont directement adjacents de sorte que les sections de passage de l'air y sont maximales.

2. Dispositif selon la revendication 1, dans lequel la hauteur de chaque bossage (32) décroît de manière sensiblement régulière entre sa hauteur maximale (H) et ses hauteurs minimales (h).

3. Dispositif selon l'une des revendications 1 et 2, dans lequel chaque bossage (32) présente un profil sensiblement plan ou sensiblement curviligne.

4. Dispositif selon l'une quelconque des revendications 1 à 3, dans lequel le flasque de maintien (22) est fixé sur la bride (14) du disque (4) au moyen de liaisons boulonnées (26) serrant leur extrémité libre (24b, 14b) respective, les orifices d'admission d'air (30) étant disposés circonférentiellement entre lesdites liaisons boulonnées.

5. Turbomachine **caractérisée en ce qu'**elle comporte au moins un dispositif de refroidissement des alvéoles d'un disque de rotor selon l'une quelconque des revendications 1 à 4.

## Patentansprüche

1. Vorrichtung zum Kühlen der Mulden einer Rotorscheibe einer Turbomaschine, umfassend:
eine Rotorscheibe (4), die umfasst:
an ihrem Umfang eine Vielzahl von im Wesentlichen axialen Mulden (10, 10a), die um die Rotationsachse (X-X) der Scheibe gleichmäßig verteilt sind, und
einen ringförmigen Flansch (14), der sich von einer stromaufwärtigen radialen Seite (16) der Scheibe aus stromaufwärts erstreckt,
einen ringförmigen Halteflansch (22), der an der stromaufwärtigen radialen Seite der Scheibe angebracht ist und einen ringförmigen Flansch (24) umfasst, der sich stromaufwärts erstreckt und der um den Flansch (14) der Scheibe angeordnet ist und dabei mit diesem einen ringförmigen Raum (28) ausspart, welcher einen Hohlraum für die Verteilung der Kühlluft bildet, wobei dieser Verteilungshohlraum an seinem stromabwärtigen Ende in den Boden einer jeden der Mulden der Scheibe, an deren stromaufwärtigen Ende mündet, und
eine Vielzahl von Luftzuführöffnungen (30), die um die Rotationsachse der Scheibe gleichmäßig verteilt sind und sich in den Verteilungshohlraum an dessen stromaufwärtigen Ende öffnen,
**dadurch gekennzeichnet, dass** die Außenseite des Flansches (14) der Scheibe (4) und/oder die Innenseite des Flansches (24) des Halteflansches (22) an ihrem stromabwärtigen Ende und im Bereich einer jeden in der radialen Verlängerung der Luftzuführöffnungen (30) gelegenen Mulde (10a) der Scheibe einen vorspringenden Buckel (32) in dem Luftverteilungshohlraum (28) aufweist, wobei jeder Buckel (32) eine maximale Höhe (H) im Bereich der Mulden (10a) der Scheibe, die in der radialen Verlängerung der entsprechenden Luftzuführöffnung (30) gelegen sind, aufweist, so dass der Durchlassquerschnitt der Luft dort minimal ist, sowie minimale Höhen (h) auf halbem Abstand zwischen der entsprechenden Luftzuführöffnung und den beiden Öffnungen, die zu dieser direkt benachbart sind, so dass die Durchlassquerschnitte der Luft dort maximal sind.

2. Vorrichtung nach Anspruch 1, bei der die Höhe eines jeden Buckels (32) zwischen seiner maximalen Höhe (H) und seinen minimalen Höhen (h) im Wesentlichen gleichmäßig abnimmt.

3. Vorrichtung nach einem der Ansprüche 1 und 2, bei der jeder Buckel (32) ein im Wesentlichen ebenes oder im Wesentlichen krummliniges Profil aufweist.

4. Vorrichtung nach einem der Ansprüche 1 bis 3, bei der der Halteflansch (22) an dem Flansch (14) der Scheibe (4) mittels Bolzenverbindungen (26), die deren jeweiliges freies Ende (24b, 14b) festklemmen, befestigt ist, wobei die Luftzuführöffnungen (30) zwischen den Bolzenverbindungen umfangsmäßig angeordnet sind.

5. Turbomaschine, **dadurch gekennzeichnet, dass** sie wenigstens eine Vorrichtung zum Kühlen der Mulden einer Rotorscheibe nach einem der Ansprüche 1 bis 4 umfasst.

## Claims

1. A device for cooling the slots in a turbomachine rotor disk, the device comprising:
a rotor disk comprising:
at its periphery, a plurality of substantially axial slots that are regularly distributed around the axis of rotation of the disk; and
an annular flange extending upstream from an upstream radial face of the disk;
a retaining annulus mounted against the upstream radial face of the disk and including an annular flange that extends upstream and that is placed around the flange of the disk, co-operating therewith to leave an annular space forming a cooling air diffusion cavity, this diffusion cavity opening out at its downstream end into the bottom of each of the disk slots, at the upstream ends thereof; and a plurality of air admission orifices regularly distributed around the axis of the rotation of the disk and opening out into the diffusion cavity at the upstream end thereof ; the outer face of the flange of the disk, and/or the inner face of the flange of the retaining annulus presenting, at its downstream end and at the level of each slot of the disk that is situated radially in register with an air admission orifice, a projection projecting into the air diffusion cavity, each projection presenting a maximum height facing the slots of the disk that are situated radially in register with the corresponding air admission orifice such that the flow section for air thereat is at a minimum, and presenting minimum heights halfway between the corresponding air admission orifice and the two orifices that are directly adjacent thereto, such that the flow sections for air thereat are at a maximum.

2. A device according to claim 1, wherein the height of each projection decreases in substantially regular manner between its maximum height and its minimum heights.

3. A device according to claim 2, wherein each projection presents a profile that is substantially plane or substantially curvilinear.

4. A device according to any one of claims 1 to 3, wherein the retaining annulus is fastened to the flange of the disk by means of bolted connections clamping their respective free ends together, the air admission orifices being disposed circumferentially between said bolted connections.

5. A turbomachine, including at least one device for cooling the slots of a rotor disk according to any one of claims 1 to 4.
